# EUROPÄISCHE PATENTANMELDUNG

(11) **EP 1 944 952 A1**
(43) Veröffentlichungstag der Anmeldung: **16.07.2008**
(21) Anmeldenummer: 07405363.8
(22) Anmeldetag: 20.12.2007
(51) Int. Cl.: H04M 1/247, H04M 1/2745, H04M 1/725

(54) **Für Blinde leicht zu bedienendes Mobiltelefon sowie funktionell gleichartiges Schnurlostelefon**

(30) Priorität: 15.01.2007 CH 532007
(71) Anmelder: Lüber, Heinrich, 5400 Baden (CH)
(72) Erfinder: Lüber, Heinrich, 5400 Baden (CH)

(57) **Zusammenfassung**

Es handelt sich um 2, für blinde Personen, funktionell gleichartige Mobil- und Schnurlostelefone, die getrennt oder auch gemeinsam in einer Lade- und Sendestation, im stationären Zustand, untergebracht sind. Spezielle, sich gut merkbare Funktionstasten (1) ermöglichen dem Blinden, teils zusammen mit den Nummerntasten (2), teils kombiniert mit Steuertasten (3), eine angemessene Zahl von Telefonverbindungen zu erstellen. Die Bedienungsoberfläche sowie die Grössenverhältnisse sind bei beiden Telefonen, dem Mobiltelefon und dem Schnurlostelefon, identisch. Somit kann abrupt, ohne sich umstellen zu müssen, vom Mobiltelefon zum Schnurlostelefon und umgekehrt, gewechselt werden. Die Telefone haben ein relativ kleines und dennoch übersichtliches Display, welches ja nur dem Programmierer von Telefonadressen dienen muss.

## Beschreibung

Die Erfindung betrifft ein, für Blinde leicht zu bedienendes Mobiltelefon sowie ein funktionell gleichartiges Schnurlostelefon, zusammen mit oder ohne kombinierte Lade- und Sendestation.

Wenn man in Verkaufsgeschäften von "Handies" das Personal betreffend der Existenz von Mobil- sowie auch von Schnurlostelefonen für Blinde anfragt, bekommt man in der Regel folgende Auskunft: <Es gibt vermutlich "Handies" auf deren 9 oder 10 Nummerntasten für den Blinden mehr oder weniger sich merkbare Telefonadressen abgespeichert sind. Auch ist uns bekannt, dass es Arten von Geräten mit integrierter "Voice Identification" = Stimmerkennung geben soll. Diese Telefone sind aber ziemlich teuer und kompliziert zu bedienen. Wir sind aber noch nie diesbezüglich angesprochen worden. Auch wissen wir nicht, wo man diese beziehen könnte.>

Unsere hochtechnisierte Gesellschaft, denke man im vorliegenden Fall an die sogenannten "Handies", die heutzutage nicht nur die Erwachsenen, sondern bald auch jedes Kind zur Hand hat, um mit der "Welt" verbunden zu sein, sollte doch in der Lage sein, unsern behinderten Mitmenschen, im aktuellen Fall den Sehbehinderten, ein Gerät zur Verfügung zu stellen, das Ihnen erlaubt auf eine relativ einfache Art und Weise, mit ihren Bekannten telefonisch in Verbindung zu treten.

Die nachfolgend spezifizierten 2 Geräte: "Mobiltelefon für Blinde" und "Schnurlostelefon für Blinde", werden fortan eine wertvolle Hilfe betreffend der Kommunikation der Blinden mit ihren Mitmenschen sein. Es ist zu erwähnen, dass die genannten Telefone ohne mit irgendwelchen Spitzfindigkeiten ausgerüstet, nicht sehr kostenintensiv sein werden. Dies ist ein sehr wichtiger Faktor, da zu bedenken ist, dass Blinde kaum zu den Grossverdienern zählen.
Die vernünftige Grösse, die ideale Form, das kleine Gewicht (nicht zuletzt wegen des relativ kleinen Displays), die allgemeine Handlichkeit, die zusammenklappbare Ausführung (dadurch Schutz gegen ungewollte Tastendrücke und Beschädigungen) sind Voraussetzungen, die das im folgenden beschriebene Mobiltelefon für Blinde bestens erfüllt. Bezeichnungen der zwei Ausführungsvarianten :

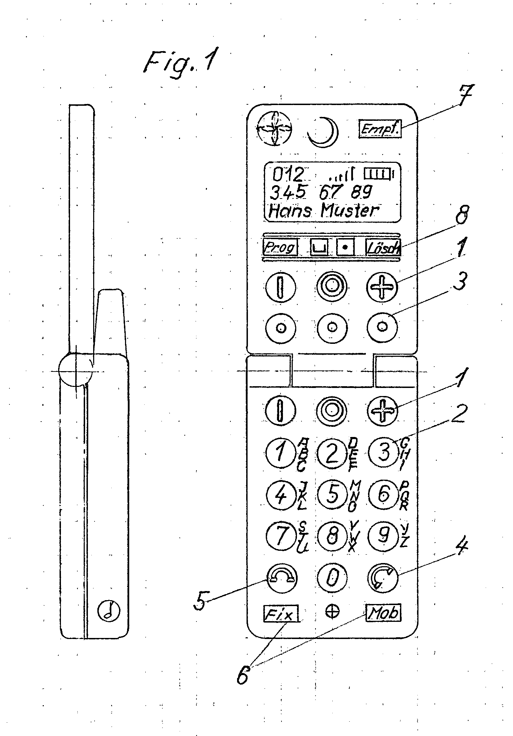

- **Fig. 1**: Mobiltelefon für Blinde, fortan MTB genannt in Englisch: BlindDial MobilePhone

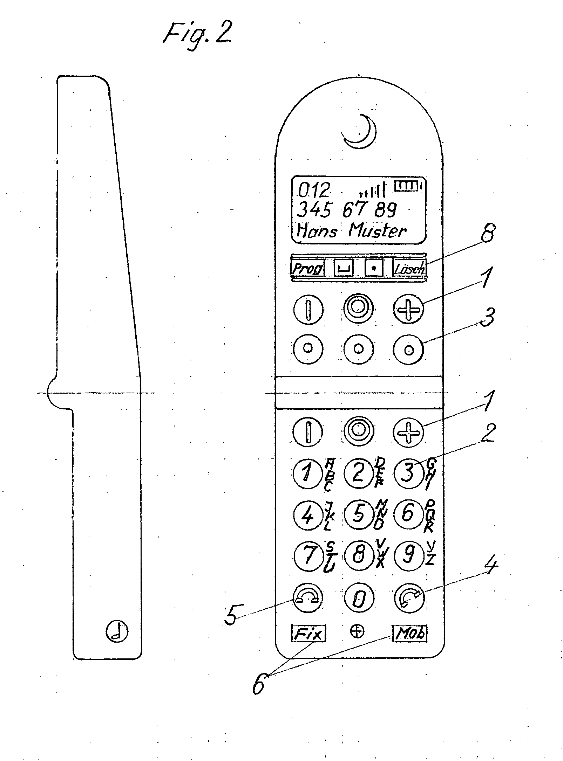

- **Fig. 2**: Schnurlostelefon für Blinde, fortan STB genannt in Englisch: BlindDial CordlessPhone

### Einzige körperliche und funktionelle Unterschiede des MTBs zum STB:

Das MTB besteht aus 2 auf- und zusammenklappbaren Hälften. Das STB besteht aus einer einzigen Einheit, gleich wie die herkömmlichen Schnurlostelefone. Das MTB ist im Ruhezustand zugeklappt und somit gegen unbeabsichtigte Tastendrücke und Beschädigungen bestens geschützt. Sobald das MTB aufgeklappt wird, beginnt die Sendersuche. Dies falls nicht schon auf Empfang (Standby) geschaltet war. Sobald das MTB wieder zugeklappt wird, wird die Verbindung zum Sender wieder unterbrochen, aber nur falls nicht auf Empfang geschaltet ist respektive wurde.

### Beschreibung der wesentlichen Eigenschaften, die die Telefone in sich vereinigen:

Die Bedienungsoberfläche sowie die Grössenverhältnisse sind bei beiden Telefonen, dem MTB und dem STB, identisch. Somit kann der/die Blinde abrupt, ohne sich umstellen zu müssen, vom MTB zum STB und umgekehrt, wechseln. Anordnung der Tasten:
Auf dem Unterteil des MTBs und des STBs sind die Nummerntasten 2 zusammen mit der Gesprächs- Sende/Antwort-Taste 4 und der Gesprächs- Ende-Taste 5 und zusätzlich 3 spezielle Funktionstasten 1 sowie 2 Umschalttasten 6 angeordnet, mittels denen vor oder nach der Wahl einer Verbindung beliebig auf das Mobil- respektive Fixnettelefon umgeschaltet werden kann. Auf dem Oberteil sind, für den das Telefon bedienenden Blinden, 3 Funktionstasten 1 und 3 Steuertasten 3, und beim MTB zusätzlich noch die Empfangstaste 7 angeordnet. Das Display, und vier zusätzlich angebrachte kleinere Tasten 8, sind auch auf dem Oberteil angeordnet, sie dienen zum Programmieren von Telefonadressen. Die auch zum Programmieren notwendigen Buchstaben des Alphabets sind auf dem Unterteil jeweils neben den Nummerntasten angeschrieben. Das Programmieren von Telefonadressen ist einfach, und kann somit von jeder dem/der Blinden nahestehenden Person durchgeführt werden.

### Wählen mit den unten angebrachten 3 Funktionstasten und 10 Nummerntasten:

Mit den 3 Funktionstasten (Balken,- Ring- und Kreuztaste) zusammen mit den 10 Nummerntasten kann auch ein/eine weniger begabter/begabte Blinder/Blinde sich zumindest 10 Telephonadressen auf eine ausgeklügelte Art leicht merken und diese auch wählen.
Festlegung des Programmierers: Balkentaste für weibliche Personen, Ringtaste für neutrale Adressen, Kreuztaste für männliche Personen.

Der/die Blinde ruft seine/ihre Mutter an: Balkentaste links drücken! Nummemtaste 1 drükken!
Sendetaste drücken! Bei seiner/ihrer Mutter läutet das Telefon.
Des weitern:
Balkentaste + Nummerntaste 4 = ältere Schwester des/der Blinden
Balkentaste + Nummerntaste 7 = jüngere Schwester des/der Blinden
Der/die Blinde ruft seinen/ihren Vater an:
Kreuztaste + Nummemtaste 3 = Vater des/der Blinden
Des weitern:
Kreuztaste + Nummemtaste 6 = älterer Bruder des/der Blinden
Kreuztaste + Nummemtaste 9 = jüngerer Bruder des/der Blinden
Der/die Blinde ruft andere Adressen an, zum Beispiel:
Ringtaste + Nummerntaste 2 = Arbeitgeber des/der Blinden
Ringtaste + Nummerntaste 5 = Taxi des/der Blinden
Ringtaste + Nummerntaste 8 = Polizei
Ringtaste + Nummerntaste 0 = Ambulanz

Wählen mittels Kombination der oben angebrachten 3 Funktionstasten und den 3 Steuertasten: Mit den 3 Funktionstasten (Balken,- Ring- und Kreuztaste) zusammen mit den 3 Punkt-Steuertasten kann ein/eine etwas routinierter/routinierte Blinder/Blinde sich zusätzlich noch leicht 15 und wenn auch etwas anspruchsvoller, bis zu 45 Telephonadressen merken und diese wählen. Voraussetzung für die Anwendung dieser erweiterten Wahl ist das Kennen der 26 Buchstaben des Alphabets.
Der/die Blinde ruft Freundinnen oder Bekannte an:
Zum Beispiel die Dody, die Hedy und die Elsa: Alle 3 Vornamen haben je 4 Buchstaben Der/die Blinde weiss, dass die Dody die älteste, die Hedy die zweitälteste und die Elsa die jüngste ist. Er/sie weiss auch, dass die Ältesten auf der Punkttaste unter der Balkentaste, die Zweitältesten auf der Punkttaste unter der Ringtaste und die Drittältesten auf der Punkttaste unter der Kreuztaste programmiert sind.
Die Dody, sie ist die älteste von den Dreien, anrufen: Balkentaste links oben drücken!, darunter plazierte Punkttaste 4 mal drücken!, das bedeutet: erstens D, zweitens o, drittens d, viertens y. Sendetaste drücken! Bei seiner/ihrer Freundin Dody läutet das Telefon.
Des weitern:
Die Hedy, sie ist die zweitälteste von den Dreien, anrufen: Balkentaste links oben drükken!, Unter der Ringtaste plazierte Punkttaste 4 mal drücken!, das bedeutet: erstens H, zweitens e, drittens d, viertens y. Sendetaste drücken! Bei seiner/ihrer Freundin Hedy läutet das Telefon.
Des weitern:
Die Elsa, sie ist die jüngste von den Dreien, anrufen: Balkentaste links oben drücken!, unter der Kreuztaste plazierte Punkttaste 4 mal drücken!, das bedeutet: erstens E, zweitens I, drittens s, viertens a. Sendetaste drücken! Bei seiner/ihrer Freundin Elsa läutet das Telefon.
Der/die Blinde ruft den Bruno an:
Kreuztaste rechts oben drücken!, darunter plazierte Punkttaste 5 mal drücken!, das bedeutet: erstens B, zweitens r, drittens u, viertens n, fünftens o. Sendetaste drücken! Bei seinem/ihrem Freund Bruno läutet das Telefon.
Der/die Blinde ruft den Helmut an:
Kreuztaste rechts oben drücken!, darunter plazierte Punkttaste 6 mal drücken!, das bedeutet: erstens H, zweitens e, drittens I, viertens m, fünftens u sechstens t. Sendetaste drücken! Bei seinem/ihrem Freund Helmut läutet das Telefon.
Bei männlichen Vornamen oder auch Nachnamen gleicher Anzahl von Buchstaben, gleichartig betreffend Altersunterschiede verfahren wie bei weiblichen Namen, aber in umgekehrter Richtung.
Der/die Blinde ruft IKEA an:
Ringtaste oben in der Mitte drücken! Darunter plazierte Punkttaste 4 mal drücken!, das bedeutet: erstens I, zweitens K, drittens E, viertens A. Sendetaste drücken! Bei IKEA läutet das Telefon. Auf der Ringtaste, zusammen mit den Punkttasten unterhalb der Balken- und der Kreuztaste , können im gleichen oder ähnlichen Sinn wie mittels der Balkentaste und der Kreuztaste, weitere Adressen abgespeichert werden.

Telefonnummem, die mittels den direkt über den Nummerntasten 2 angeordneten 3 Funktionstasten 1 aufgerufen werden können, abspeichern: Siehe auch: "Wählen mittels Kombination der unten angebrachten 3 Funktionstasten und den 10 Nummerntasten" zum Beispiel Polizei Tel-Nr. 117: "Prog-Taste" drücken!, dann untere "Ring-Taste" drükken!, dann Nummerntaste 8 drücken!, dann 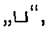 dann mit den Alphabettasten "Polizei" tippen, dann 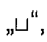 dann "117" tippen, dann "." (Punkt)!, Fertig.
zum Beispiel die ältere Schwester, des/der Blinden Tel-Nr. 011 222 33 44 :
"Prog-Taste" drücken!, dann untere "Balken-Taste" drücken!, dann Nummerntaste 4 drükken!, dann 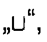 dann "Name" der älteren Schwester tippen, dann 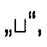 dann "011 222 33 44" tippen, dann "." (Punkt)!, Fertig.
zum Beispiel den älteren Bruder des/der Blinden Tel-Nr. 022 444 66 88 :
"Prog-Taste" drücken!, dann untere "Kreuz-Taste" drücken!, dann Nummerntaste 6 drücken!, dann 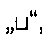 dann "Name" des älteren Bruders tippen, dann 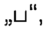 dann "022 444 66 88" tippen, dann "." (Punkt)!, Fertig.

Beim Abspeichern von Mobiltelefon- Nummem ist nachdem die "Prog-Taste" gedrückt worden ist, zusätzlich noch die "Mob-Taste" zu drücken.

Abrufbare Namen mit zugehörigen Telefon-Nrn. abspeichern: Siehe auch: "Wählen mittels Kombination der oben angebrachten 3 Funktionstasten und der 3 Steuertasten"
zum Beispiel Fixnet-Nr. Hans Muster 012 345 67 89 :
"Prog-Taste" drücken!, dann obere "Kreuz-Taste" drücken!, dann mit den Alphabettasten "Hans" tippen, dann 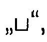 dann "Muster", dann 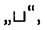 dann "012 345 67 89", dann "."(Punkt)! , Fertig.
zum Beispiel Mobile-Nr. Hans Muster 098 765 43 21 :
"Prog-Taste" drücken!, dann "Mob-Taste" drücken!, dann "Kreuz-Taste" drücken!, dann mit den Alphabettasten "Hans" tippen, dann 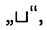 dann "Muster", dann 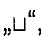 dann "098 765 43 21", dann "."(Punkt)!, Fertig.
Es gilt allgemein, falls falsch getippt: "Lösch-Taste" drücken, löscht jeweils letztes Zeichen! Rote "Hörertaste" drücken, um ganze Telefonnummer zu löschen!

Abgespeicherte Telefon-Nrn. löschen, die mittels Kombination der unten angeordneten 3 Funktionstasten zusammen mit jeweils einer der 10 Nummerntasten abgespeichert worden sind, zum Beispiel: Polizei
"Lösch-Taste" drücken! dann untere "Ring-Taste" drücken!, dann Nummerntaste 8 drükken!, dann "." (Punkt)!, "Lösch-Taste" abermals drücken! Fertig. Diese Tel.-Nr. ist gelöscht. Beim Löschen von Mobiltelefon- Nummern ist, nachdem die "Lösch-Taste" gedrückt worden ist, zusätzlich noch die "Mob-Taste" zu drücken.

Abgespeicherte Adressen mit zugehörigen Telefon-Nrn. löschen, die mittels Kombination der oben angebrachten 3 Funktionstasten und der für die entsprechende Adresse zuständige Steuertaste, abgespeichert wurden, zum Beispiel Hans Muster Fixnet-Nr. 012 345 67 89: "Lösch-Taste" drücken!, dann obere "Kreuz-Taste" drücken!, dann mit den Alphabettasten "Hans" tippen, dann "."(Punkt)!, dann "Lösch-Taste" abermals drücken! Fertig. Diese Adresse mit Tel.-Nr. ist gelöscht. zum Beispiel, Hans Muster Mob-Nr. 098 765 43 21 :
"Lösch-Taste" drücken!, "Mob-Taste" drücken!, dann obere "Kreuz-Taste" drücken!,
dann mit den Alphabettasten "Hans" tippen, dann "."(Punkt)!, dann "Lösch-Taste" abermals drücken! Fertig. Diese Adresse mit Tel.-Nr. ist gelöscht.

Mittels der kleinen und der grossen "Musiknoten-Taste", die beidseitig (auf der Schmalseite) am Telefon angebracht sind, kann man die Lautstärke während dem Telefonieren verändern.

Es ist ratsam ein MTB jeweils zusammen mit einem STB mit einer gemeinschaftlichen Sende- und Ladestation zu bestücken. Siehe Fig. 3. Die Vorteile sind offensichtlich!: Das für den Blinden mühsame Einfädeln des Ministeckers vom "Mobilen Ladegerät" ins MTB wird durch das einfache Einstecken des MTB ins stationäre Ladegerät ersetzt. Es ist praktisch die beiden Telefone, wenn der/die Blinde zu Hause ist, beisammen zu haben. Der/die Blinde kommt nach Hause, steckt sein/ihr MTB ins Ladegerät, und hat gleichzeitig die Kontrolle übers Befinden des STB. Er/sie weiss, dass es geladen und dort ist wo er/sie sich hinbewegt, wenn's klingelt.
Er/sie verlässt morgens oder wenn auch immer, die Wohnung oder das Haus, ergreift das Mobile, weiss dass dessen Akku geladen ist, und weiss auch, dass das STB bei der Rückkehr im geladenen Zustand in seiner "Garage" aufzufinden ist.
Da die Bedienungsoberfläche des entsprechenden STB praktisch unverändert gleich ist wie die Bedienungsoberfläche des oben beschriebenen MTB, ist beim jeweiligen Wechsel von einem Telefon zum andern keine Umgewöhnung notwendig.

## Patentansprüche

1. Zwei Telefone für Blinde, das eine ist ein Mobiltelefon fortan MTB genannt, das andere ist ein Schnurlostelefon für Blinde fortan STB genannt, auf deren Oberteile im wesentlichen das Display, 4 Programmiertasten (8), 3 Funktionstasten (1) und 3 Steuertasten (3) sowie auf deren Unterteile die üblichen Nummemtasten (2), 3 Funktionstasten (1) und 2 Umschalttasten (6) angeordnet sind,
**dadurch gekennzeichnet, dass** die Bedienungsoberflächen, das heisst, die Grössenordnung, die Form und die Anordnung der Tasten beim MTB sowie beim STB, identisch sind.

2. Zwei Telefone für Blinde gemäss Anspruch 1,
**dadurch gekennzeichnet, dass** mit den, auf den unteren Telefonhälften, angeordneten 3 Funktionstasten (1) (Balken,- Ring- und Kreuztaste), zusammen mit den 10 Nummerntasten (2) ein/eine Blinder/Blinde sich zumindest 10 Telephonadressen merken, und diese auch leicht wählen kann.

3. Zwei Telefone für Blinde gemäss Anspruch 1 und 2,
**dadurch gekennzeichnet, dass** durch Drücken der Balkentaste und dann eine jeweilig darunter angeordnete Nummerntaste, programmierte Telefonnummern weiblicher Personen, abgerufen respektive gewählt werden können, z. B. Balkentaste, dann Nummerntaste 1 für die Mutter des/der Blinden oder Balkentaste, dann Nummerntaste 4 für die ältere Schwester des/der Blinden oder Balkentaste, dann Nummemtaste 7 für die jüngere Schwester des/der Blinden.

4. Zwei Telefone für Blinde gemäss Anspruch 1 bis 3,
**dadurch gekennzeichnet, dass** durch Drücken der Kreuztaste und dann eine der darunter angeordneten Nummerntasten, programmierte Telefonnummem männlicher Personen, im gleichen Sinn wie unter Anspruch 3 abgerufen respektive gewählt werden können, z. B. Kreuztaste, dann Nummerntaste 1 für den Vater des/der Blinden, usw.

5. Zwei Telefone für Blinde gemäss Anspruch 1 bis 4,
**dadurch gekennzeichnet, dass** durch Drücken der Ringtaste und dann eine der darunter angeordneten Nummerntasten, programmierte für den/die Blinden/Blinde wichtige Telefonnummern gewählt werden können, z. B. Ringtaste, dann Nummemtaste 2 für den Arbeitgeber des/der Blinden, usw.

6. Zwei Telefone für Blinde gemäss Anspruch 1,
**dadurch gekennzeichnet, dass** mit den auf den oberen Telefonhälften angeordneten 3 Funktionstasten (1) (Balken,- Ring- und Kreuztaste) zusammen mit den jeweils darunter angeordneten entsprechenden 3 Steuertasten (3) (Punkttasten) Telefonadressen, das heisst Namen mit zugehörigen Telefonnummern, gewählt werden können.

7. Zwei Telefone für Blinde gemäss Anspruch 1 und 6,
**dadurch gekennzeichnet, dass** beispielsweise durch Drücken der Balkentaste und dann 4 mal Drücken der darunter angeordneten Punkttaste für den Namen Hedy = 4 Buchstaben, die gespeicherte Telefonnummer der Hedy aufgerufen wird.

8. Zwei Telefone für Blinde gemäss Anspruch 1, 6 und 7,
**dadurch gekennzeichnet, dass** man mittels der oberen Balkentaste zusammen mit der darunter liegenden Punkttaste bis zu 5 weibliche Telefonadressen und im gleichen Sinn mit der Kreuztaste bis zu 5 männliche Telefonadressen sowie mit der Ringtaste bis zu 5 neutrale Telefonadressen abrufen (wählen) kann.

9. Zwei Telefone für Blinde gemäss Anspruch 1und 6 bis 8,
**dadurch gekennzeichnet, dass** man mittels kombinieren der Balkentaste sowie auch der Ringtaste und der Kreuztaste mit den Punkttasten (3), die jeweils unterhalb der nicht gedrückten Funktionstaste angeordnet sind, bis zu 30 weitere Telefonadressen abrufen (wählen) kann.

10. Zwei Telefone für Blinde gemäss Anspruch 1,
**dadurch gekennzeichnet, dass** man mit den unterhalb der Nummerntasten angeordneten Umschalttasten (6), "Fix-Taste" und "Mob-Taste", beliebig von der Fixnet-Telefonnummer zur Mobilnet-Telefonnummer und umgekehrt umschalten kann, dies falls beide Nummern programmiert sind.
